# EUROPEAN PATENT APPLICATION

(11) **EP 4 700 075 A1**
(43) Date of publication of application: **25.02.2026**
(21) Application number: 25152294.2
(22) Date of filing: 16.01.2025
(51) Int. Cl.: C08J 9/00, C08G 63/16, C08L 67/02

(54) **FOAM**

(30) Priority: 22.08.2024 TW 113131578
(71) Applicant: Industrial Technology Research Institute, 310401 Hsinchu (TW)
(72) Inventor: Wu, Jin-An, Yunlin County (TW); Wu, Chin-Lang, Miaoli County (TW); Chang, Sheng-Lung, Taoyuan City (TW); Chen, Chien-Ming, Hsinchu City (TW)
(74) Representative: Fuchs Patentanwälte Partnerschaft mbB

(57) **Abstract**

A foam is provided. The foam includes a foaming material and a plurality of cells arranged within the foaming material. The foaming material is prepared from a composition, which includes 0.01-2.0 parts by weight of a flow aid and 100 parts by weight of a block copolymer. The block copolymer includes a first block, a second block, and a linking moiety. The first block is connected to the second block via the linking moiety. The first block is an aromatic polyester block. The second block is an aliphatic polyether block, an aliphatic polyester block, or an aliphatic polycarbonate block. The linking moiety is a residue of a dehydrogenated polyol.

## Description

### TECHNICAL FIELD

The disclosure relates to a foam.

### BACKGROUND

Conventional sports shoes have a highly complex structure, typically including uppers and soles that are made of various shoe components made from a variety of different materials and assembled using adhesives. The distinct components may provide the necessary performance attributes required of sports shoes, such as a light weight, abrasion resistance, high elasticity, resistance to hydrolysis, and deformation resistance of the midsole components.

Currently, the vast majority of midsole components are manufactured using ethylene-vinyl acetate copolymer (EVA). In order to achieve the necessary performance for midsole components, ethylene-vinyl acetate copolymer must be prepared from a high-temperature chemical crosslinking and molded chemical foaming process, which leads to recycling challenges. Although thermoplastic polyurethane (TPU) has gradually come into use in some high-end sports shoes due to its advantages such as abrasion resistance and good physical properties, TPU has limitations. Specifically, it has poor hydrolysis resistance, yellowing resistance, and insufficient compression resistance, which limit its practical applications.

The industry has started seeking new alternative materials that are recyclable. Among these, thermoplastic polyester elastomer (TPEE) has gradually gained attention due to its promising physical properties.

However, the thermoplastic polyester elastomers that are currently commercially available do not meet the anticipated future demands of low-carbon emission processes. Foams made from commercially available linear thermoplastic polyester elastomers exhibit insufficient melt strength and crystallization properties, resulting in smaller bubble sizes and higher bubble density. This makes it difficult to achieve lightweight properties and results in poor resilience.

### SUMMARY

According to embodiments of the disclosure, the disclosure provides a foam, which consists of a foaming material and a plurality of cells, wherein the plurality of cells is arranged within the foaming material. The foaming material is prepared from a composition that includes 0.01 to 2.0 parts by weight of flow aid, and 100 parts by weight of block copolymer. According to embodiments of the disclosure, the block copolymer includes a first block, a second block, and a linking moiety. The first block is connected to the second block via the linking moiety. The first block is an aromatic polyester block. The second block is an aliphatic polyether block, aliphatic polyester block, or aliphatic polycarbonate (PC) block. The linking moiety is a residue of a dehydrogenated polyol, wherein the polyol is trihydric alcohol, tetrahydric alcohol, pentahydric alcohol, hexahydric alcohol, heptahydric alcohol, or octahydric alcohol.

A detailed description is given in the following embodiments.

### DETAILED DESCRIPTION

The foam and method for preparing the same are described in detail in the following description. In the following detailed description, for purposes of explanation, numerous specific details and embodiments are set forth in order to provide a thorough understanding of the present disclosure. The specific elements and configurations of the following detailed description are set forth in order to clearly describe the present disclosure. It will be apparent, however, that the exemplary embodiments set forth herein are used merely for the purpose of illustration, and the inventive concept may be embodied in various forms without being limited to those exemplary embodiments. In addition, the drawings of different embodiments may use like and/or corresponding numerals to denote like and/or corresponding elements in order to clearly describe the present disclosure. However, the use of like and/or corresponding numerals in the drawings of different embodiments does not suggest any correlation between different embodiments. As used herein, the term "about" in quantitative terms refers to plus or minus an amount that is general and reasonable to persons skilled in the art.

Moreover, the use of ordinal terms such as "first", "second", "third", etc., in the disclosure to modify an element does not by itself connote any priority, precedence, or der of one claim element over another or the temporal order in which it is formed, but are used merely as labels to distinguish one claim element having a certain name from another element having the same name (but for use of the ordinal term) to distinguish the claim elements.

According to embodiments of the disclosure, a foam (such as a foam including a specific thermoplastic polyester elastomer (TPEE)) and a method for prepared the same are provided. The commercially available thermoplastic polyester elastomer typically features a linear structure and a fast crystallization rate. Therefore, in the molten state, it suffers from insufficient melt strength. During cooling, it solidifies rapidly, which is unfavorable for foam processing and molding, resulting in defects such as ruptured cells, larger foam cell sizes, or uneven distribution of foam cell sizes. According to embodiments of the disclosure, the form of the disclosure may consist of a foaming material and a plurality of cells, wherein the foaming material is prepared from a composition that includes a flow aid and specific block copolymers (such as thermoplastic polyester elastomer block copolymers). The block copolymer includes a first block, a second block, and a linking moiety. Since the linking moiety is a residue of a dehydrogenated polyol, the block copolymer adopts a branched structure, increasing the degree of molecular chain entanglement in the block copolymer. This further enhances the melt strength of the block copolymer and improves the crystallization and flow properties of the block copolymer. As a result, the foam of the disclosure exhibits low density, high flexibility, high resilience, and high retention of physical properties (such as tensile strength retention, flexural strength retention, tear strength retention, and compression permanent set ), resulting in being suitable for high-end sporting goods or footwear materials.

In addition, according to embodiments of the disclosure, a recycled polyester (such as polyethylene terephthalate (PET)) can be used as a raw material. An aromatic polyester oligomer (used as the hard segment of the block copolymer of the disclosure) may be prepared from the recycled polyester via a chemical depolymerization process in the presence of a glycolysis depolymerization agent and a reaction catalyst. The aromatic polyester oligomer may be further reacted with an aliphatic polymer (such as aliphatic polyether, aliphatic polyester, or aliphatic polycarbonate (PC)) (serving as the soft segment of the block copolymer of the disclosure) and a polyol, resulting in the block copolymer of the disclosure. Accordingly, the foam of the disclosure may be produced using recycled materials, meeting the requirements for reducing carbon emissions.

According to embodiments of the disclosure, the disclosure provides a foam, wherein the foam may consist of a foaming material and a plurality of cells. The cells may be arranged within the foaming material. The foaming material may be prepared from a composition. According to embodiments of the disclosure, the composition may include 0.01 to 2.0 parts by weight (such as 0.02, 0.03, 0.04, 0.05, 0.06, 0.07, 0.08, 0.09, 0.1, 0.2, 0.5, 0.7, 1.0, 1.2, 1.5, 1.7, or 1.9 parts by weight) of flow aid, and 100 parts by weight of block copolymer. The block copolymer may be a block copolymer having a branched structure, such as thermoplastic polyester elastomer block copolymer. The block copolymer may include a first block, a second block, and a linking moiety, wherein the first block is connected to the second block via the linking moiety. The first block may be an aromatic polyester block. The second block may be an aliphatic polymer block, such as aliphatic polyether block, aliphatic polyester block, or aliphatic polycarbonate (PC) block. In addition, the linking moiety may be a residue of a dehydrogenated polyol.

According to embodiments of the disclosure, the polyol may be trihydric alcohol, tetrahydric alcohol, pentahydric alcohol, hexahydric alcohol, heptahydric alcohol, or octahydric alcohol.

According to embodiments of the disclosure, the block copolymer may include at least one of first block, at least one of second block, and at least one of linking moiety. According to embodiments of the disclosure, the block copolymer may consist of at least one of first block, at least one of second block, and at least one of linking moiety.

According to embodiments of the disclosure, in the block copolymer, the weight ratio of the total weight of the first block to the total weight of the second block may be 1: 4 to 4: 1, such as 1: 3, 1: 2, 1: 1, 2: 1, or 3: 1. When the block copolymer has an excessively high first block content, the block copolymer may exhibit overly high hardness, excessively low elongation and resilience, and insufficient melt strength, making it difficult to obtain foam with a well-formed foam cell structure. When the block copolymer has an excessively high second block content, the block copolymer may exhibit inadequate tensile strength, and a low crystallization rate and degree of crystallinity, which hinder proper cooling and solidification during the foaming process. The obtained foam tends to have poor foam cell morphology, poor compression permanent set, and reduced retention of physical properties

According to embodiments of the disclosure, in the block copolymer, the linking moiety may have a content of 0.1 wt% to 2 wt% (such as 0.2 wt%, 0.3 wt%, 0.5 wt%, 0.7 wt%, 1 wt%, 1.2 wt%, 1.5 wt%, or 1.8 wt%), based on the total weight of the first block and second block. When the content of the linking moiety in the block copolymer falls within the specified range, the block copolymer has a branched structure and appropriate molecular chain entanglement, thereby allowing the foam of the disclosure to achieve low density, high flexibility, high resilience, high melt strength, and a uniform foam cell structure.

According to embodiments of the disclosure, the foam of the disclosure may have a density of about 0.05 g/mL to 0.2 g/mL(such as 0.06 g/mL, 0.07 g/mL, 0.08 g/mL, 0.09 g/mL, 0.1 g/mL, 0.13g/mL, 0.15g/mL, or 0.19 g/mL). According to embodiments of the disclosure, the foam may have a resilience (i.e. ball rebound resilience) of about 60% to 80%(such as 61%, 62%, 65%, 70%, or 75%). The density and resilience of the foam of the disclosure are measured by the method according to ASTM D3574.

According to embodiments of the disclosure, the block copolymer may have a hardness (i.e. shore A hardness) of about 30D to 70D(such as 40D, 50D, or 60D). The shore A hardness of the block copolymer is determined by the method according to ASTM D2240.

According to embodiments of the disclosure, the block copolymer may have a melt strength of about 10 mN to 20 mN (such as 11 mN, 12 mN, 13 mN, 14 mN, 15 mN, 16 mN, 17 mN, 18 mN, or 19 mN) at a temperature of a melting point of the block copolymer plus 30 °C. The melt strength of the block copolymer can be measured using a rheometer (AR-G2, manufactured by TA Instruments, USA) combined with a melt strength tester (Rheotens). The test temperature is the melting point of the block copolymer plus 30 °C, with a wheel traction acceleration of 24 mm/s. The melting point (Tm) of the block copolymer can be measured using differential scanning calorimetry (DSC) (model Discovery DAS 25, manufactured by TA Instruments, Inc.). When the melt strength of the block copolymer is too high, it significantly reduces flowability, and the foaming gas cannot mix smoothly with the melt, resulting in processing difficulties or uneven foaming. When the melt strength of the block copolymer is too low, foam cell rupture and the merging of foam cells into larger cells can occur during the foam cell growth stage, ultimately resulting in the deterioration of foam properties.

According to embodiments of the disclosure, the melt viscosity of the block copolymer is about less than 1,500 Pa*s (such as between 10 Pa*s and 1,500 Pa*s), measured at a temperature of the block copolymer's melting point plus 30°C and a shear rate of 100 sec⁻¹. The melt viscosity can be determined using a capillary rheometer (following ASTM D3835), with a shear rate of 100 sec⁻¹, a test temperature of the melting point of the block copolymer plus 30°C, a plate length of 25 mm, and a gap of 200 µm.

According to embodiments of the disclosure, the block copolymer of the disclosure may have an intrinsic viscosity (IV) of about 1.0 dL/g to 1.8 dL/g (such as 1.1 dL/g, 1.2 dL/g, 1.3 dL/g, 1.4 dL/g, 1.5 dL/g, 1.6 dL/g, or 1.7dL/g). The intrinsic viscosity of the block copolymer is determined by the method according to ASTM D4603-2003.

According to embodiments of the disclosure, the foam may have a foam cell particle size distribution D90 of about 10µm to 400µm (such as 10µm, 30µm, 50µm, 70µm, 100µm, 150µm, 200µm, 250µm, 300µm, or 350µm). The particle size distribution D90 means that 90 vol% of the powder has a diameter less than the value defined by D90. According to embodiments of the disclosure, the particle size distribution D90 is measured according to the standard ISO 13322-1:2004.

According to embodiments of the disclosure, the first block may be prepared by reacting an aromatic dicarboxylic acid with an aliphatic dihydric alcohol via esterification. According to embodiments of the disclosure, the aromatic dicarboxylic acid may be terephthalic acid, isophthalic acid, phthalic acid, 1,4-naphthalenedicarboxylic acid, 2,5-naphthalenedicarboxylic acid, 2,6-naphthalenedicarboxylic acid, 2,7-naphthalenedicarboxylic acid., or a combination thereof. According to embodiments of the disclosure, the aliphatic dihydric alcohol may be ethylene glycol, 1,3-propanediol, 1,4-butanediol, neopentyl glycol, 1,4-cyclohexanedimethanol, or a combination thereof.

According to embodiments of the disclosure, the first block may be poly(ethylene terephthalate block, poly(trimethylene terephthalate) block, poly(butylene terephthalate) block, poly(ethylene isophthalate) block, poly(trimethylene isophthalate) block, or poly(butylene isophthalate) block.

According to embodiments of the disclosure, the first block may have a weight-average molecular weight within a range of 800 g/mol to 3,000 g/mol (such as 1,000 g/mol, 1,200 g/mol, 1,500 g/mol, 2,000 g/mol, 2,200 g/mol, 2,500 g/mol, or 2,700 g/mol). When the weight-average molecular weight of the first block is too high, the reactivity of the terminal reactive functional group becomes too low, or the stereoscopic hindrance of the long molecular chain becomes too large, ultimately leading to the failure to further increase the molecular weight. When the weight-average molecular weight of the first block is too low, it becomes difficult to achieve microphase separation between the hard and soft segments, which negatively impacts the material's mechanical properties and resilience.

According to embodiments of the disclosure, the second block may be polyethylene glycol block, polypropylene glycol block, polytetramethylene ether glycol block, polyethylene propylene glycol block, poly(ethanediol-co-adipate glycol) block, poly(butanediol-co-adipate glycol) block, poly(hexanediol-co-adipate glycol) block, polycaprolactone glycol block, or poly(hexamethylene carbonate glycol) block.

According to embodiments of the disclosure, the second block may have a weight-average molecular weight within a range of 500 g/mol to 2,000 g/mol (such as 600 g/mol, 700 g/mol, 800 g/mol, 900 g/mol, 1,000 g/mol, 1,200 g/mol, 1,500 g/mol, 1,700 g/mol, or 2,000 g/mol). When the weight-average molecular weight of the second block is too high, the second block will form a phase-separated morphology with the first block, leading to the failure to further increase the molecular weight. When the weight-average molecular weight of the second block is too low, it becomes difficult to achieve microphase separation between the hard and soft segments, which negatively impacts the material's mechanical properties and resilience.

According to embodiments of the disclosure, wherein the polyol, which has a weight-average molecular weight of 800 g/mol to 3,000 g/mol (such as 1,000 g/mol, 1,200 g/mol, 1,500 g/mol, 2,000 g/mol, 2,200 g/mol, 2,500 g/mol, or 2,700 g/mol), is aliphatic polyether trihydric alcohol, aromatic polyether trihydric alcohol, aliphatic polyester trihydric alcohol, aromatic polyester trihydric alcohol, aliphatic polyether tetrahydric alcohol, aromatic polyether tetrahydric alcohol, aliphatic polyester tetrahydric alcohol, aromatic polyester tetrahydric alcohol, aliphatic polyether pentahydric alcohol, aromatic polyether pentahydric alcohol, aliphatic polyester pentahydric alcohol, aromatic polyester pentahydric alcohol, aliphatic polyether hexahydric alcohol, aromatic polyether hexahydric alcohol, aliphatic polyester hexahydric alcohol, aromatic polyester hexahydric alcohol, aliphatic polyether heptahydric alcohol, aromatic polyether heptahydric alcohol, aliphatic polyester heptahydric alcohol, aromatic polyester heptahydric alcohol, aliphatic polyether octahydric alcohol, aromatic polyether octahydric alcohol, aliphatic polyester octahydric alcohol, or aromatic polyester octahydric alcohol.

According to embodiments of the disclosure, the block copolymer may have a weight-average molecular weight of about 20,000 g/mol to 100,000 g/mol (such as 30,000 g/mol, 40,000 g/mol, 50,000 g/mol, 60,000 g/mol, 70,000 g/mol, 80,000 g/mol, or 90,000 g/mol). When the weight-average molecular weight of the block copolymer is too high, the block copolymer exhibits poor flowability after thermal melting, resulting in foam with inferior tensile strength, tear resistance, and resilience. When the weight-average molecular weight of the block copolymer is too low, the poor melt strength of the block copolymer leads to foam with an undesirable foam cell structure (including ruptured cells and non-uniform foam cell sizes), which further negatively impacts mechanical strength and resilience. The weight-average molecular weight (Mw) of the block copolymer of the disclosure can be determined by gel permeation chromatography (GPC) based on a polystyrene calibration curve).

According to embodiments of the disclosure, the flow aid may be stearic acid, stearate, stearamide, paraffin, oleamide, triglyceride of stearic acid (HTG), monoglyceride of stearic acid (GMB), or a combination thereof.

According to embodiments of the disclosure, the composition for preparing the foaming material of the disclosure may further include 0.01 to 1 parts by weight of antioxidant. The antioxidant may be hindered phenol antioxidant, ester antioxidant, thioester antioxidant, phosphite antioxidant, or a combination thereof. For example, the antioxidant may be 2,6-di-tert-butyl-4-methylphenol, 2,5-di-tert-amylhydroquinone, 2,5-di-tert-butylhydroquinone, 4,4'-butylidene-bis(3-methyl-6-tert-butylphenol), 2,2'-methylene-bis(4-methyl-6-tert-butylphenol), 2,2'-methylene-bis(4-ethyl-6-tert-butylphenol), 4,4'-thiobis(2-t-butyl-5-methylphenol), 2,2'-thio diethyl bis-[3-(3,5-di-t-butyl-4-hydroxyphenyl)-propionate], pentaerythrityl-tetrakis-[3-(3,5-di-t-butyl-4-hydroxyphenyl)-propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)-propionate], triethyleneglycol-bis-[3-(3-t-butyl-4-hydroxy-5-methylphenol)propionate], thiodiethylene bis-[3-(3,5-di-t-butyl-4-hydroxyphenyl)propionate], 6,6'-di-t-butyl-2,2'-thiodi-p-cresol, dioctadecyl 3,3'-thiodipropionate, trisnonylphenol phosphite, triphenyl phosphite, diphenyl phosphite, phenyl diisodecyl phosphite, diphenyl isodecyl phosphite, diphenyl isooctyl phosphite, tetraphenyl dipropyleneglycol diphosphite, or a combination thereof.

According to embodiments of the disclosure, the composition for preparing the foaming material of the disclosure may optionally further include other additives, such as heat stabilizers, light stabilizers, softeners, plasticizers, antistick agents, antistatic agents, melt strength enhancers, impact modifiers, or a combination thereof. The amount of these additives is not limited and can be optionally modified by a person of ordinary skill in the field, who may adjust it according to actual needs. According to embodiments of the disclosure, the amount of each additive may be about 0.01 parts by weight to 5 parts by weight.

According to embodiments of the disclosure, the composition for preparing the foaming material of the disclosure may consist of 100 parts by weight of the block copolymer of the disclosure and 0.01-2.0 parts by weight of flow aid. According to other embodiments of the disclosure, the composition for preparing the foaming material of the disclosure may consist of 100 parts by weight of the block copolymer of the disclosure, 0.01-2.0 parts by weight of flow aid, and 0.01-1.0 parts by weight antioxidant.

According to embodiments of the disclosure, the composition for preparing the foaming material of the disclosure may consist of main ingredient and minor ingredient. wherein, the main ingredient may consist of block copolymer, flow aid, and antioxidant. The minor ingredient may consist of the additive. According to embodiments of the disclosure, the composition for preparing the foaming material of the disclosure may substantially consist of the copolymer, flow aid, and antioxidant, and the other ingredient may be the additive. The amount of the main ingredient is greater than or equal to 90 wt%, based on the total weight of the main ingredient and minor ingredient.

According to embodiments of the disclosure, the composition for preparing the foaming material of the disclosure does not require the addition of a crosslinking agent or chain extender because the block copolymer used already has a branched structure and appropriate molecular chain entanglement. Thus, the composition can achieve the technical purpose of improving foam tensile and tear strength, flexibility, resilience, and compression permanent set without including a crosslinking agent or chain extender. In addition, according to embodiments of the disclosure, the composition for preparing the foaming material does not include a polymer prepared from styrene as a reactive monomer.

According to embodiments of the disclosure, the block copolymer of the disclosure may be a reaction product of an aromatic oligomer (used to form the first block, i.e., the hard segment), an aliphatic oligomer (used to form the second block, i.e., the soft segment), and a polyol. In addition, the aforementioned reaction can be carried out in the presence of a catalyst, wherein the catalyst may be organozirconium (such as zinc acetate), organic titanium (such as tetrabutyl titanate), organic tin, sulfuric acid, potassium hydroxide, potassium carbonate, 4-dimethylaminopyridine (DMAP), antimony oxide, or a combination thereof. The amount of the catalyst may be 0.01 wt% to 1 wt% (such as 0.05 wt%, 0.1 wt%, 0.2 wt%, 0.3 wt%, 0.5 wt%, 0.7 wt%, or 0.9 wt%), based on the total weight of the aromatic oligomer and aliphatic oligomer.

According to embodiments of the disclosure, the aromatic oligomer may be poly(ethylene terephthalate), poly(trimethylene terephthalate), poly(butylene terephthalate), poly(ethylene isophthalate), poly(trimethylene isophthalate), or poly(butylene isophthalate). The aromatic oligomer may have a weight-average molecular weight within a range of 800 g/mol to 3,000 g/mol (such as 1,000 g/mol, 1,200 g/mol, 1,500 g/mol, 2,000 g/mol, 2,200 g/mol, 2,500 g/mol, or 2,700 g/mol). According to embodiments of the disclosure, the aromatic oligomer is not polystyrene, nor is the aromatic oligomer an oligomer that contains repeating units derived from styrene. Namely, the first block of the disclosure does not include repeating units derived from styrene.

According to embodiments of the disclosure, the aliphatic oligomer may be polyoxyethylene glycol, polypropylene glycol, polytetramethylene ether glycol, polyethylene propylene glycol, polyethanediol-co-adipate glycol, polybutanediol-co-adipate glycol, polyhexanediol-co-adipate glycol, polycaprolactone glycol, or poly(hexamethylene carbonate) glycol. The aliphatic oligomer may have a weight-average molecular weight within a range of 500 g/mol to 2,000 g/mol (such as 600 g/mol, 700 g/mol, 800 g/mol, 900 g/mol, 1,000 g/mol, 1,200 g/mol, 1,500 g/mol, 1,700 g/mol, or 2,000 g/mol). In addition, the polyol is the same as defined above.

According to embodiments of the disclosure, the weight ratio of the aromatic oligomer to the aliphatic oligomer may be about 1: 4 to 4: 1, such as 1: 3, 1: 2, 1: 1, 2: 1, or 3:1. The amount of the polyol may be 0.01 wt% to 2 wt% (such as 0.2 wt%, 0.3 wt%, 0.5 wt%, 0.7 wt%, 1 wt%, 1.2 wt%, 1.5 wt%, or 1.8 wt%), based on the total weight of the aromatic oligomer and aliphatic oligomer. According to embodiments of the disclosure, since the content of the first block in the block copolymer of the disclosure is directly proportional to the amount of the aromatic oligomer, and the content of the first block is also directly proportional to the amount of the aliphatic oligomer, the weight ratio of the aromatic oligomer and aliphatic oligomer used to prepare the block copolymer can be equivalent to the ratio of the total weight of the first block to the total weight of the second block.

According to embodiments of the disclosure, recycled polyester materials may be used in the preparation of the block copolymer of the disclosure. For example, the recycled polyester is disposed in a reactor, and a diol depolymerization agent (such as ethylene glycol, propylene glycol, or butylene glycol) and a catalyst is added. Under a nitrogen atmosphere, the temperature is raised to 140°C to 180°C, while stirring simultaneously to optimize the chemical depolymerization reaction of the recycled polyester, obtaining an aromatic oligomer (used to form the first block), wherein the byproducts removed during the depolymerization reaction can be collected through distillation

According to embodiments of the disclosure, the disclosure also provides a method for preparing foam in order to form the foam of the disclosure. The method for preparing foam includes subjecting the composition to a foaming process to obtain the foam.

According to embodiments of the disclosure, the foaming process can be mechanical foaming, physical foaming, or chemical foaming. The foaming process can be performed in the presence of a blowing agent according to various foaming process. According to embodiments of the disclosure, the blowing agent may be organic thermal decomposition type blowing agent, and the organic thermal decomposition type blowing agent may be N,N'-dinitrosopentamethylenetetramine, azodicarbonamide, p,p'-oxybisbenzenesulfonylhydrazide, p-toluenesulfonylhydrazide, benzenesulfonylhydrazide, 3,3'-disulfonylhydrazide diphenylsulfone, toluenesulfonyl semicarbazide, trihydrazinotriazine, or a combination thereof, but not limited to. In addition, the blowing agent may be inorganic thermal decomposition type blowing agent, and the inorganic thermal decomposition type blowing agent can be sodium hydrogen carbonate, potassium hydrogen carbonate, ammonium hydrogen carbonate, sodium carbonate, ammonium carbonate, or a combination thereof, but not limited to. According to embodiments of the disclosure, when performing a physical foaming process to form the foam material, a supercritical fluid cam be employed. The supercritical fluid may be carbon dioxide, water, methane, ethane, butane, propane, pentane, cyclopentane, hexane, ethylene, propylene, methanol, ethanol, acetone, methyl ethyl ketone, dichloromethane, nitrogen gas, or a combination thereof. The amount of blowing agent may be optionally modified by a person of ordinary skill in the field, but not limited to.

Below, exemplary embodiments will be described in detail with reference to the accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### Preparation of block copolymer

### Preparation Example 1

100 parts by weight of recycled polyester material (recycled PET bottles_polyethylene terephthalate), 50 parts by weight of ethylene glycol, and 0.02 parts by weight of antimony trioxide were added into the reaction bottle, obtaining a first composition. Next, the first composition was stirred under nitrogen atmosphere and the temperature of the reaction bottle was raised to140°C-160°C to allow the recycled polyester material and ethylene glycol to undergo a depolymerization reaction. During the reaction, byproducts (i.e., excess ethylene glycol) were removed simultaneously through distillation, and the torque of the product in the reaction bottle was monitored via a torque meter. When the measured torque value significantly reduced (such as reduced from 80Nm to 30Nm), this was taken as the reaction endpoint, yielding a mixture containing polyethylene terephthalate (PET). Next, gel permeation chromatography (GPC) was used to analyze the polyethylene terephthalate (PET) in the mixture, thereby revealing that the weight-average molecular weight of the obtained polyethylene terephthalate (PET) was about 3,000 g/mol. According to embodiments of the disclosure, the mixture containing the polyethylene terephthalate (PET) could be further purified to obtain PET, or it could be used directly for subsequent reactions. Herein, the block copolymer preparation was conducted using the direct-use approach as an example.

Next, the mixture containing polyethylene terephthalate (PET), polytetramethylene ether glycol (with a weight-average molecular weight of about 2,000 g/mol), polyether tetrahydric alcohol (CAS No. 115-77-5, commercially available from ARCOS), and titanium butoxide (TBT) was mixed to obtain a second composition. Herein, the weight ratio of polyethylene terephthalate (PET) to polytetramethylene ether glycol was 7:3, the amount of polyether tetrahydric alcohol was 0.3 wt%, based on the total weight of polyethylene terephthalate (PET) and polytetramethylene ether glycol, and the amount of tetrabutyl titanate was 0.025 wt%, also based on the total weight of polyethylene terephthalate (PET) and polytetramethylene ether glycol. Under 210°C to 240°C and vacuum, the second composition undergoes melt copolymerization, and the torque of the product in the reaction bottle was monitored via the torque meter. When the measured torque reached 180Nm, the reaction was considered complete, and the vacuum was broken with nitrogen. The result was placed in water, pelletized after cooling, and dried to obtain Block copolymer (1) (which has a branched structure). Next, the weight-average molecular weight, hardness, tensile strength, and elongation of Block copolymer (1) were measured, and the results are shown in Table 1. The weight-average molecular weight (Mw) was measured via a gel permeation chromatography (GPC). The hardness (i.e., Shore A hardness) was determined according to ASTM D 2240. The tensile strength was determined according to ASTM D3574. And elongation was determined using a universal tensile machine according to ASTM D412.

Next, Block copolymer (1) was heated to a temperature of the melting point of Block copolymer (1) plus 30°C, and the melt strength and melt viscosity of Block copolymer (1) were measured. The results are shown in Table 1. Melt strength can be measured using a rheometer (AR-G2, manufactured by TA Instruments, USA) in combination with a melt strength tester (Rheotens), with the test temperature set to the temperature of the melting point of the block copolymer plus 30 °C and the wheel traction acceleration set at 24 mm/s. Melt viscosity was measured using a rheometer with a shear rate of 100 sec⁻¹, at a test temperature of the melting point of the block copolymer plus 30°C, with a plate length of 25 mm, and a gap of 200 µm.

### Preparation Example 2

Preparation Example 2 was performed in the same manner as the preparation method of Block copolymer (1) disclosed in Preparation Example 1, except that ethylene glycol was replaced with butylene glycol to obtain Block copolymer (2). Next, the weight-average molecular weight, hardness, tensile strength, and elongation of Block copolymer (2) were measured, and the results are shown in Table 1.

Next, Block copolymer (2) was heated to a temperature of the melting point of Block copolymer (2) plus 30°C, and the melt strength and melt viscosity of Block copolymer (2) were measured, and the results are shown in Table 1.

### Preparation Example 3

Preparation Example 3 was performed in the same manner as the preparation method of Block copolymer (1) disclosed in Preparation Example 1, except that the polyester material (recycled PET bottles_polyethylene terephthalate) was replaced with the polyester material (recycled polyester textile _polyethylene isophthalate), obtaining Block 3). Next, the weight-average molecular weight, hardness, tensile strength, and elongation of Block copolymer (3) were measured, and the results are shown in Table 1.

Next, Block copolymer (3) was heated to a temperature of the melting point of Block copolymer (3) plus 30°C, and the melt strength and melt viscosity of Block copolymer (3) were measured, and the results are shown in Table 1.

### Preparation Example 4

Preparation Example 4 was performed in the same manner as the preparation method of Block copolymer (1) disclosed in Preparation Example 1, except that the polyester material (recycled PET bottles_polyethylene terephthalate) was replaced with the polyester material (recycled polyester textile_polyethylene isophthalate), and ethylene glycol was replaced with butylene glycol, obtaining Block copolymer (4). Next, the weight-average molecular weight, hardness, tensile strength, and elongation of Block copolymer (4) were measured, and the results are shown in Table 1.

Next, Block copolymer (4) was heated to a temperature of the melting point of Block copolymer (4) plus 30°C, and the melt strength and melt viscosity of Block copolymer (4) were measured, and the results are shown in Table 1.

### Preparation Example 5

Preparation Example 5 was performed in the same manner as the preparation method of Block copolymer (1) disclosed in Preparation Example 3, except that the amount of the polyether tetrahydric alcohol was increased from 0.3wt% to 0.6 wt%, obtaining Block copolymer (5). Next, the weight-average molecular weight, hardness, tensile strength, and elongation of Block copolymer (5) were measured, and the results are shown in Table 1.

Next, Block copolymer (5) was heated to a temperature of the melting point of Block copolymer (5) plus 30°C, and the melt strength and melt viscosity of Block copolymer (5) were measured, and the results are shown in Table 1.

### Preparation Example 6

Dimethyl terephthalate, butanediol, and antimony trioxide were added into the reaction bottle, obtaining a first composition. The molar ratio of dimethyl terephthalate to butanediol was 1: 1, and the amount of antimony trioxide was 0.02 wt%, based on the total weight of dimethyl terephthalate and butanediol. Next, the first composition was stirred under nitrogen atmosphere and the temperature of the reaction bottle was raised to 140°C-160°C, thereby reacting dimethyl terephthalate with butanediol. After reacting for 90 minutes, polybutylene terephthalate (PBT) was obtained. Next, gel permeation chromatography (GPC) was used to analyze the obtained polybutylene terephthalate (PBT), thereby revealing that the weight-average molecular weight of the obtained polybutylene terephthalate (PBT) was about 3,000 g/mol.

Next, polybutylene terephthalate (PBT), polytetramethylene ether glycol (with a weight-average molecular weight of 2,000 g/mol), polyether tetrahydric alcohol (CAS No. 115-77-5, commercially available from ARCOS), and titanium butoxide (TBT) were mixed, obtaining a second composition. Herein, the weight ratio of polybutylene terephthalate (PBT) to polytetramethylene ether glycol was 7:3. The amount of tetrabutyl titanate was 0.025 wt%, based on the total weight of polybutylene terephthalate (PBT) and polytetramethylene ether glycol. Under 210°C to 240°C and vacuum, the second composition undergoes melt copolymerization, and the torque of the product in the reaction bottle was monitored via the torque meter. When the measured torque reached 180Nm, the reaction was considered complete, and the vacuum was broken with nitrogen. The result was placed in water, pelletized after cooling, and dried to obtain Block copolymer (6). Next, the weight-average molecular weight, hardness, tensile strength, and elongation of block copolymer (6) were measured, and the results are shown in Table 1. Next, Block copolymer (6) was heated to a temperature of its melting point plus 30°C, and the melt strength and melt viscosity of Block copolymer (6) were measured, and the results are shown in Table 1.

### Preparation Example 7

Dimethyl terephthalate, butanediol, and antimony trioxide were added into the reaction bottle, obtaining a first composition. The molar ratio of dimethyl terephthalate to butanediol was 1:1, and the amount of antimony trioxide was 0.02wt%, based on the total weight of dimethyl terephthalate and butanediol. Next, the first composition was stirred under nitrogen atmosphere and the temperature of the reaction bottle was raised to 140°C-160°C, thereby reacting dimethyl terephthalate with butanediol. After reacting for 90 minutes, polybutylene terephthalate (PBT) was obtained. Next, gel permeation chromatography (GPC) was used to analyze the obtained polybutylene terephthalate (PBT), thereby revealing that the weight-average molecular weight of the obtained polybutylene terephthalate (PBT) was about 3,000 g/mol.

Next, polybutylene terephthalate (PBT), polytetramethylene ether glycol (with a weight-average molecular weight of 2,000 g/mol), and titanium butoxide (TBT) were mixed, obtaining a second composition. Herein, the weight ratio of polybutylene terephthalate (PBT) to polytetramethylene ether glycol was 7:3. The amount of tetrabutyl titanate was 0.025 wt%, based on the total weight of polybutylene terephthalate (PBT) and polytetramethylene ether glycol. Under 210°C to 240°C and vacuum, the second composition undergoes melt copolymerization, and the torque of the product in the reaction bottle was monitored via the torque meter. When the measured torque reached 180Nm, the reaction was considered complete, and the vacuum was broken with nitrogen. The result was placed in water, pelletized after cooling, and dried to obtain Block copolymer (7). Next, the weight-average molecular weight, hardness, tensile strength, and elongation of block copolymer (7) were measured, and the results are shown in Table 1. Next, Block copolymer (7) was heated to a temperature of its melting point plus 30°C, and the melt strength and melt viscosity of Block copolymer (7) were measured, and the results are shown in Table 1.

### Preparation Example 8

Dimethyl isophthalate, butanediol, and antimony trioxide were added into the reaction bottle, obtaining a first composition. The molar ratio of dimethyl isophthalate to butanediol was 1: 1, and the amount of antimony trioxide was 0.02 wt%, based on the total weight of dimethyl isophthalate and butanediol. Next, the first composition was stirred under nitrogen atmosphere and the temperature of the reaction bottle was raised to 140°C-160°C, thereby reacting dimethyl isophthalate with butanediol. After reacting for 90 minutes, polybutylene terephthalate (PBT) was obtained. Next, gel permeation chromatography (GPC) was used to analyze the obtained polybutylene isophthalate, thereby revealing that the weight-average molecular weight of the obtained polybutylene isophthalate was about 3,000 g/mol.

Next, polybutylene isophthalate, polytetramethylene ether glycol (with a weight-average molecular weight of about 2,000 g/mol), and titanium butoxide (TBT) were mixed, obtaining a second composition. Herein, the weight ratio of polybutylene isophthalate to polytetramethylene ether glycol was 7:3. The amount of tetrabutyl titanate was 0.025 wt%, based on the total weight of polybutylene terephthalate (PBT) and polytetramethylene ether glycol. Under 210°C to 240°C and vacuum, the second composition undergoes melt copolymerization, and the torque of the product in the reaction bottle was monitored via the torque meter. When the measured torque reached 180Nm, the reaction was considered complete, and the vacuum was broken with nitrogen. The result was placed in water, pelletized after cooling, and dried to obtain Block copolymer (8). Next, the weight-average molecular weight, hardness, tensile strength, and elongation of block copolymer (8) were measured, and the results are shown in Table 1. Next, Block copolymer (8) was heated to a temperature of its melting point plus 30°C, and the melt strength and melt viscosity of Block copolymer (8) were measured, and the results are shown in Table 1.

**Table 1**

| | | Preparat ion Exampl e 1 | Prepara tion Exampl e 2 | Preparat ion Exampl e 3 | Preparat ion Exampl e 4 | Prepara tion Exampl e 5 | Preparat ion Exampl e 6 | Preparat ion Exampl e 7 | Preparat ion Exampl e 8 |
|---|---|---|---|---|---|---|---|---|---|
| fir st bl oc k | aromati c polyest er | recycle d _polyet hylene terephth alate | recycle d _polybu tylene terephth alate | recycled _polyet hylene isophtha late | recycle d _polybu tylene isophth alate | recycle d _polyet hylene isophth alate | polybut ylene terephth alate | polybut ylene terephth alate | polybut ylene isophth alate |
| | weight-average molecu lar weight (g/mole ) | 3,000 | 3,000 | 3,000 | 3,000 | 3,000 | 3,000 | 3,000 | 3,000 |
| polyether tetrahydric alcohol (wt%) | | 0.3 | 0.3 | 0.3 | 0.3 | 0.6 | 0.3 | - | - |
| | | properties of block copolymer | | | | | | | |
| weight-average molecular weight (g/mole) | | 75,000 | 79,000 | 80,500 | 78,500 | 98,000 | 83,500 | 62,800 | 64,000 |
| hardness (Shore D) | | 45 | 46 | 47 | 47 | 46 | 47 | 48 | 46 |
| tensile strength (kg/cm²) | | 259 | 280 | 243 | 266 | 272 | 269 | 277 | 264 |
| elongation (%) | | 711 | 695 | 702 | 691 | 685 | 705 | 635 | 721 |
| melt strength (mN) | | 11.5 | 10.2 | 13.4 | 14.0 | 16.8 | 12.5 | 1.2 | 1.5 |
| viscosity (Pa*s) | | 845 | 1,020 | 865 | 989 | 1,344 | 877 | 2,966 | 2,642 |

### Preparation Example 9

Preparation Example 9 was performed in the same manner as the preparation method of Block copolymer (1) disclosed in Preparation Example 1, except that the weight ratio of polyethylene terephthalate (PET) to polytetramethylene ether glycol was adjusted from 7:3 to 1: 5, obtaining Block copolymer (9). Next, the weight-average molecular weight, hardness, tensile strength, and elongation of Block copolymer (9) were measured, and the results are shown in Table 2. Next, Block copolymer (9) was heated to the temperature of the melting point of Block copolymer (9) plus 30°C, and the melt strength and melt viscosity of Block copolymer (9) were measured, and the results are shown in Table 2.

### Preparation Example 10

Preparation Example 10 was performed in the same manner as the preparation method of Block copolymer (1) disclosed in Preparation Example 1, except that the weight ratio of polyethylene terephthalate (PET) to polytetramethylene ether glycol was adjusted from 7:3 to 5: 1, obtaining Block copolymer (10). Next, the weight-average molecular weight, hardness, tensile strength, and elongation of Block copolymer (10) were measured, and the results are shown in Table 2. Next, Block copolymer (10) was heated to the temperature of the melting point of Block copolymer (10) plus 30°C, and the melt strength and melt viscosity of Block copolymer (10) were measured, and the results are shown in Table 2.

### Preparation Example 11

Polyethylene terephthalate (PET) with a weight-average molecular weight of about 450 g/mol was provided.

Next, polyethylene terephthalate (PET), polytetramethylene ether glycol (with a weight-average molecular weight of 2,000 g/mol), polyether tetrahydric alcohol (CAS No. 115-77-5, commercially available from ARCOS), and titanium butoxide (TBT) were mixed, obtaining a second composition. Herein, the weight ratio of polyethylene terephthalate (PET) to polytetramethylene ether glycol was 1: 4. The amount of polyether tetrahydric alcohol was 0.3wt%, based on the total weight of polyethylene terephthalate (PET) and polytetramethylene ether glycol. The amount of tetrabutyl titanate was 0.025 wt%, based on the total weight of polyethylene terephthalate (PET) and polytetramethylene ether glycol. Under 210°C to 240°C and vacuum, the second composition undergoes melt copolymerization, and the torque of the product in the reaction bottle was monitored via the torque meter. When the measured torque reached 180Nm, the reaction was considered complete, and the vacuum was broken with nitrogen. The result was placed in water, pelletized after cooling, and dried to obtain Block copolymer (11). Next, the weight-average molecular weight, hardness, tensile strength, and elongation of Block copolymer (11) were measured, and the results are shown in Table 2. Next, Block copolymer (11) was heated to a temperature of its melting point plus 30°C, and the melt strength and melt viscosity of Block copolymer (11) were measured, and the results are shown in Table 2.

### Preparation Example 12

Polyethylene terephthalate (PET) with a weight-average molecular weight of about 4,000 g/mol was provided.

Next, polyethylene terephthalate (PET), polytetramethylene ether glycol (with a weight-average molecular weight of 2,000 g/mol), polyether tetrahydric alcohol (CAS No. 115-77-5, commercially available from ARCOS), and titanium butoxide (TBT) were mixed, obtaining a second composition. Herein, the weight ratio of polyethylene terephthalate (PET) to polytetramethylene ether glycol was 1: 4. The amount of polyether tetrahydric alcohol was 0.3wt%, based on the total weight of polyethylene terephthalate (PET) and polytetramethylene ether glycol. The amount of tetrabutyl titanate was 0.025 wt%, based on the total weight of polyethylene terephthalate (PET) and polytetramethylene ether glycol. Under 210°C to 240°C and vacuum, the second composition undergoes melt copolymerization, and the torque of the product in the reaction bottle was monitored via the torque meter. When the measured torque reached 180Nm, the reaction was considered complete, and the vacuum was broken with nitrogen. The result was placed in water, pelletized after cooling, and dried to obtain Block copolymer (12). Next, the weight-average molecular weight, hardness, tensile strength, and elongation of Block copolymer (12) were measured, and the results are shown in Table 2. Next, Block copolymer (12) was heated to a temperature of its melting point plus 30°C, and the melt strength and melt viscosity of Block copolymer (12) were measured, and the results are shown in Table 2.

### Preparation Example 13

Preparation Example 13 was performed in the same manner as the preparation method of Block copolymer (1) disclosed in Preparation Example 1, except that the weight ratio of polyethylene terephthalate (PET) to polytetramethylene ether glycol was adjusted from 7:3 to 1: 1, obtaining Block copolymer (13). Next, the weight-average molecular weight, hardness, tensile strength, and elongation of Block copolymer (13) were measured, and the results are shown in Table 2. Next, Block copolymer (13) was heated to a temperature of the melting point of Block copolymer (13) plus 30°C, and the melt strength and melt viscosity of Block copolymer (13) were measured, and the results are shown in Table 2.

**Table 2**

| | Preparation Example 9 | Preparation Example 10 | Preparation Example 11 | Preparation Example 12 | Preparation Example 13 |
|---|---|---|---|---|---|
| first block weight-average molecular weight (g/mole) | 3,000 | 3,000 | 450 | 4,000 | 3,000 |
| weight ratio of the first block and second block | 1:5 | 5:1 | 7:3 | 7:3 | 1:1 |

| properties of block copolymer | | | | | |
|---|---|---|---|---|---|
| weight-average molecular weight (g/mole) | 52,000 | 79,000 | 69,800 | 24,500 | 76,500 |
| hardness (Shore D) | 28 | 63 | 43 | 41 | 39 |
| tensile strength (kg/cm²) | 105 | 345 | 236 | 109 | 215 |
| elongation (%) | >900 | 265 | 370 | 240 | 640 |
| melt strength (mN) | 2.4 | 2.1 | 9.8 | 0.9 | 14.9 |
| viscosity (Pa*s) | 280 | 3,165 | 680 | 340 | 740 |

### Preparation of foam

### Example 1

100 parts by weight of Block copolymer (1) prepared from Preparation Example 1, 0.50 parts by weight of flow aid (with a trade number of Zn-St, commercially available from ACROS), and 0.2 parts by weight of antioxidant (with a trade number of AO1010, commercially available from ACROS) were mixed. After uniform mixing, the mixture was added into a twin-screw extruder (25Ψ, L/D=42) for melt compounding. The process conditions were a barrel temperature of 200°C to 230°C and a rotation speed of 150rpm to 300rpm. After 3 minutes of compounding, the resulting material was placed into the supercritical fluid within the microcellular foam injection molding machine (J450EL-MuCell, manufactured by Japan Steel Works LTD.), and foamed under the conditions of a temperature of 190°C to 210°C, gas pressure of 2,000 psi, and a nitrogen to carbon dioxide ratio of 7:3, obtaining Foam (1). Next, the density and resilience of Foam (1) were measured, and the results are shown in Table 3. The density and resilience of the foam were measured according to the method specified in ASTM D3574."

### Examples 2-6

Examples 2-6 were performed in the same manner as in the preparation method of Foam (1) disclosed in Example 1, except that Block copolymer (1) was replaced with Block copolymers (2)-(5) and (13) individually, obtaining Foams (2)-(6). Next, the density and resilience of Foams (2)-(6) were measured, and the results are shown in Table 3.

### Comparative Examples 1-6

Comparative Examples 1-6 were performed in the same manner as in the preparation method of Foam (1) disclosed in Example 1, except that Block copolymer (1) was replaced with Block copolymers (7)-(12) individually, obtaining Foams (7)-(11) (wherein Block copolymer (12) could not be foamed). Next, the density and resilience of Foams (7)-(11) were measured, and the results are shown in Table 3.

**Table 3**

| | density (g/mL) | resilience (%) |
|---|---|---|
| Example 1 | 0.18 | 65 |
| Example 2 | 0.19 | 67 |
| Example 3 | 0.2 | 65 |
| Example 4 | 0.2 | 63 |
| Example 5 | 0.17 | 68 |
| Example 6 | 0.18 | 66 |
| Comparative Example 1 | 0.58 | 56 |
| Comparative Example 2 | 0.65 | 53 |
| Comparative Example 3 | 0.44 | 52 |
| Comparative Example 4 | 0.68 | 39 |
| Comparative Example 5 | 0.22 | 54 |
| Comparative Example 6 | Foaming was unsuccessful. | |

As shown in Tables 1 and 3, since polyether tetrahydric alcohol was not added during the preparation of the block copolymer in Preparation Examples 7 and 8, the obtained block copolymers does not have a branched structure, and its melt strength is lower than 2 mN and its viscosity is higher than 1,500 Pa*s. Therefore, the foams of Comparative Examples 1 and 2 have a higher density (i.e., a lower foaming ratio) and lower resilience.

As shown in Tables 2 and 3, since the weight ratio of the first block to the second block used in the preparation of the block copolymer in Preparation Examples 9 and 10 was not within the range from 1: 4 to 4: 1, the melt strength of the obtained block copolymers is lower than 3 mN. As a result, the foams obtained in Comparative Examples 3 and 4 have a higher density (i.e., a lower foaming ratio) and lower resilience.

As shown in Table 2 and Table 3, since the molecular weight of polyethylene terephthalate (PET) (first block) used in in the preparation of the block copolymer in Preparation Examples 11 and 12 was too low or too high, the melt strength of the obtained block copolymers is lower than 10 mN. The foam prepared from Comparative Example 5 has a higher density (i.e., a lower foaming ratio) and lower resilience. Additionally, using the block copolymer from Preparation Example 12 in Comparative Example 6 for foam preparation did not result in foam formation.

According to embodiments of the disclosure, the block copolymer of the disclosure includes a first block, a second block, and a linking moiety. Since the linking moiety is a residue of a dehydrogenated polyol, the block copolymer adopts a branched structure, increasing the degree of molecular chain entanglement in the block copolymer. This further enhances the melt strength of the block copolymer and improves the crystallization and flow properties of the block copolymer. As a result, the foam of the disclosure exhibits low density, high flexibility, high resilience, and high retention of physical properties (such as tensile strength retention, flexural strength retention, tear strength retention, and compression permanent set), resulting in being suitable for high-end sporting goods or footwear materials.

It will be clear that various modifications and variations can be made to the disclosed methods and materials. It is intended that the specification and examples be considered as exemplary only, with the true scope of the disclosure being indicated by the following claims and their equivalents.

## Claims

1. A foam, which consists of a foaming material and a plurality of cells, wherein the plurality of cells are arranged within the foaming material, wherein the foaming material is prepared from a composition, and the composition comprises:
0.01-2.0 parts by weight of flow aid; and
100 parts by weight of block copolymer, wherein the block copolymer comprises a first block, a second block, and a linking moiety; the first block is connected to the second block via the linking moiety; the first block is an aromatic polyester block; the second block is an aliphatic polyether block, aliphatic polyester block, or aliphatic polycarbonate block; and the linking moiety is a residue of a dehydrogenated polyol, wherein the polyol is trihydric alcohol, tetrahydric alcohol, pentahydric alcohol, hexahydric alcohol, heptahydric alcohol, or octahydric alcohol.

2. The foam as claimed in Claim 1, wherein, in the block copolymer, a weight ratio of a total weight of the first block to a total weight of the second block is 1: 4 to 4: 1.

3. The foam as claimed in Claim 1, wherein the foam has a density of 0.05 g/mL to 0.2 g/mL, and the foam has a resilience of 60% to 80%.

4. The foam as claimed in Claim 1, wherein the block copolymer has a melt strength of 10 mN to 20 mN at a temperature of a melting point of the block copolymer plus 30 °C.

5. The foam as claimed in Claim 1, wherein the block copolymer has a viscosity less than 1,500Pa*s at a temperature of a melting point of the block copolymer plus 30 °C and at a shear rate of 100 sec⁻¹.

6. The foam as claimed in Claim 1, wherein the block copolymer has a hardness of 30D to 70D.

7. The foam as claimed in Claim 1, wherein the foam cell has a particle size distribution D90 of 10µm to 400µm.

8. The foam as claimed in Claim 1, wherein the first block is recycled aromatic polyester block.

9. The foam as claimed in Claim 1, wherein the first block is polyethylene terephthalate block, polytrimethylene terephthalate block, polybutylene terephthalate block, poly(ethylene isophthalate) block, poly(trimethylene isophthalate) block, or poly(butylene isophthalate) block.

10. The foam as claimed in Claim 1, wherein the first block has a weight-average molecular weight of 800 g/mol to 3,000 g/mol.

11. The foam as claimed in Claim 1, wherein the second block is polyethylene glycol block, polypropylene glycol block, polytetramethylene ether glycol block, polyethylene propylene glycol block, poly(ethanediol-co-adipate glycol) block, poly(butanediol-co-adipate glycol) block, poly(hexanediol-co-adipate glycol) block, polycaprolactone glycol block, or poly(hexamethylene carbonate glycol) block.

12. The foam as claimed in Claim 1, wherein the second block has a weight-average molecular weight of 500 g/mol to 2,000 g/mol.

13. The foam as claimed in Claim 1, wherein the polyol, which has a weight-average molecular weight of 800 g/mol to 3,000 g/mol, is aliphatic polyether trihydric alcohol, aromatic polyether trihydric alcohol, aliphatic polyester trihydric alcohol, aromatic polyester trihydric alcohol, aliphatic polyether tetrahydric alcohol, aromatic polyether tetrahydric alcohol, aliphatic polyester tetrahydric alcohol, aromatic polyester tetrahydric alcohol, aliphatic polyether pentahydric alcohol, aromatic polyether pentahydric alcohol, aliphatic polyester pentahydric alcohol, aromatic polyester pentahydric alcohol, aliphatic polyether hexahydric alcohol, aromatic polyether hexahydric alcohol, aliphatic polyester hexahydric alcohol, aromatic polyester hexahydric alcohol, aliphatic polyether heptahydric alcohol, aromatic polyether heptahydric alcohol, aliphatic polyester heptahydric alcohol, aromatic polyester heptahydric alcohol, aliphatic polyether octahydric alcohol, aromatic polyether octahydric alcohol, aliphatic polyester octahydric alcohol, or aromatic polyester octahydric alcohol.

14. The foam as claimed in Claim 1, wherein an amount of the linking moiety is 0.1 wt% to 2 wt%, based on the total weight of the first block and second block.

15. The foam as claimed in Claim 1, wherein the block copolymer has a weight-average molecular weight of 20,000 g/mol to 100,000 g/mol.
